# EUROPEAN PATENT SPECIFICATION

(11) **EP 3 282 752 B1**
(45) Date of publication and mention of the grant of the patent: **13.10.2021**
(21) Application number: 16776112.1
(22) Date of filing: 06.04.2016
(51) Int. Cl.: H04L 12/721, H04L 12/741, H04L 12/851, H04W 28/10, H04W 28/12, H04L 12/26

(54) **METHOD AND DEVICE FOR FOR IDENTIFYING A TRAFFIC FLOW**
VERFAHREN UND VORRICHTUNG ZUR IDENTIFIKATION EINES VERKEHRSFLUSSES
PROCÉDÉ ET DISPOSITIF D'IDENTIFICATION DE FLUX DE TRAFIC

(30) Priority: 07.04.2015 CN 201510159690
(43) Date of publication of application: 14.02.2018
(73) Proprietor: China Mobile Communications Corporation, Beijing 100032 (CN)
(72) Inventor: SUN, Tao, Beijing 100032 (CN); CHEN, Wei, Beijing 100032 (CN); LU, Lu, Beijing 100032 (CN); DENG, Hui, Beijing 100032 (CN)
(74) Representative: Gevers Patents
(86) International application number: PCT/CN2016/078578
(87) International publication number: WO 2016/161937

(56) References cited:
- EP-A1- 3 195 535
- WO-A1-2012/013238
- CN-A- 101 808 361
- CN-A- 103 905 447
- CN-A- 103 929 492
- US-A1- 2012 134 264
- CHINA MOBILE ET AL: "Clarification of the Dual Classifier Solution", 3GPP DRAFT; S2-151937 WAS 1897 WAS 1641_DUAL CLASSIFIER SOLUTION CLARIFICATION-V3.1, 3RD GENERATION PARTNERSHIP PROJECT (3GPP), MOBILE COMPETENCE CENTRE ; 650, ROUTE DES LUCIOLES ; F-06921 SOPHIA-ANTI , vol. SA WG2, no. Fukuoka, Japan; 20150525 - 20150529 28 May 2015 (2015-05-28), XP050981693, Retrieved from the Internet: URL:http://www.3gpp.org/ftp/Meetings_3GPP_ SYNC/SA2/Docs/ [retrieved on 2015-05-28]
- CHINA MOBILE ET AL: "Policy Based TCF Solution for FMSS", 3GPP DRAFT; S2-150654_SOLUTION_PROPOSAL_FOR_FMSS-V5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sorrento, Italy; 20150126 - 20150130 30 January 2015 (2015-01-30), XP050961708, Retrieved from the Internet: URL:http://www.3gpp.org/ftp/tsg_sa/WG2_Arc h/TSGS2_107_Sorrento/Docs/ [retrieved on 2015-01-30]

## Description

### CROSS-REFERENCE TO RELATED APPLICATIONS

The disclosure claims priority of Chinese Patent Application No. 201510159690.X, filed on April 7, 2015.

### TECHNICAL FIELD

The disclosure relates to the technical field of traffic steering, and particularly to a service traffic steering method, a service traffic steering device, and an uplink classifier.

### BACKGROUND

Along with development of mobile Internet, an operator is intended to deploy more and more traffic processing value-added devices in a Gi-Local Area Network (Gi-LAN) behind a gateway, for example, video optimization device, protocol optimization device, information recommendation information, cache device and a firewall. For the traffic, it does not require to pass through all the traffic processing value-added devices, but only part of traffic is required to be processed by part of the value-added devices according to a service chain policy of the operator. Under such a background, a service chain mechanism is proposed, that is, traffic is steered to pass through different value-added devices on demand, so that network flexibility is improved, and a traffic burden or deployment cost of the value-added devices is reduced. Different service chain identifiers correspond to different data flow processing paths.

There are a great variety of such traffic processing value-added devices with different characteristics: some processing devices is only required to process uplink traffic (for example, enhancement of some Hyper Text Transport Protocol (HTTP) data packet headers), some devices is only required to process downlink traffic (for example, video optimization and content compression), and some other devices is required to process both uplink and downlink traffic (for example, content-based charging).

For some traffic, uplink traffic is identified and analyzed by Deep Packet Inspection (DPI) to judge characteristics of the traffic and determine service chains through which the uplink traffic and downlink traffic should pass respectively. For some other traffic, downlink traffic is also required to be analyzed by DPI to identify characteristics of the traffic and determine service chains through which the traffic should pass.

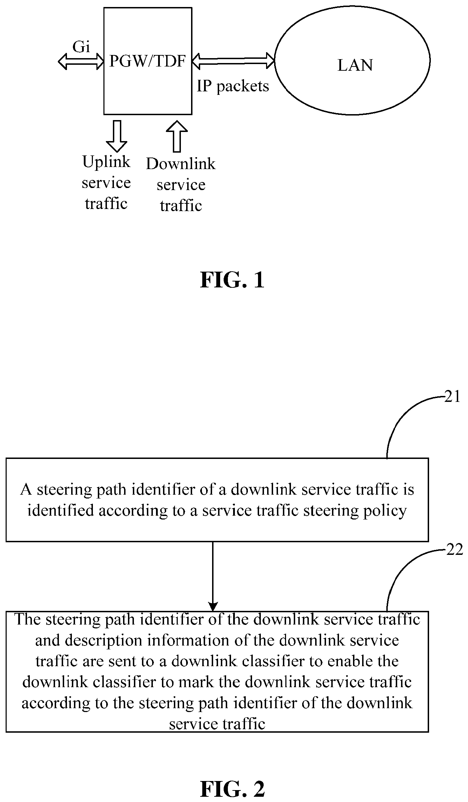

Unfortunately, there is no deep analysis on these service characteristics and no related researches on classification and optimization of downlink traffic processing manners in a current technology. A current solution adopts a classifier-based implementation manner, and all uplink and downlink traffic passes through a classifier at first, as shown in Fig. 1, which is not so optimal particularly for a mobile network. This means that downlink traffic is identified by a Packet Data Network (PDN) Gateway (PGW) or a Traffic Detection Function (TDF) at first, then is subjected to service processing at a Gi-LAN, and is returned to the PGW for sending to a user.

Thus it can be seen that most of solutions in a related technology are implemented on the basis of a single classifier and still have the following problems, although being capable of meeting requirements on networking flexibility and cost reduction.

First, there is no analysis made in combination with a service characteristic. For example, for some traffic, uplink traffic is identified and analyzed to judge characteristics of the traffic and determine service chains through which the uplink traffic and downlink traffic should pass respectively. For some other traffic, downlink traffic is also required to be analyzed to identify characteristics of the traffic and determine service chains through which the traffic should pass. Adopting the same processing manner causes unnecessary resource consumption.

Second, adopting a single classifier makes a load excessively high and easily causes a single-point failure. Some traffic characteristics are identified only by combining uplink and downlink traffic, but if each piece of traffic passes through the same classifier, there is pressure on the classifier, and a traffic bottleneck easily occurs.

Third, a route is roundabout. Downlink traffic reaches a TDF or a PGW from a Gi-LAN, then returns to the Gi-LAN for processing, and is sent to a user after returning to the TDF (PGW). Such a manner makes the route not so optimal.

CHINA MOBILE ET AL: "Policy Based TCF Solution for FMSS", 3GPP DRAFT; S2-150654_SOLUTION_PROPOSAL_ FOR_FMSS-V5, XP050961708, discloses an efficient FMSS solution.

### SUMMARY

The invention is set out in the appended set of claims.

The invention intends to reduce overhead brought by passing both uplink service traffic and downlink service traffic through the same classifier and improve a processing capacity of a network system.

### BRIEF DESCRIPTION OF DRAWINGS

In order to describe the technical solutions in the disclosure or the related technology more clearly, the drawings required to be used for description about the embodiments will be simply introduced below. Obviously, the drawings described below are only some embodiments of the disclosure. Those skilled in the art may further obtain other drawings according to these drawings without creative work.
Fig. 1 is a schematic diagram of PGW or TDF-based service traffic steering according to the related technology;
Fig. 2 is a step flowchart of a service traffic steering method applied to an uplink classifier according to an embodiment of the disclosure;
Fig. 3 is a schematic diagram of a service traffic steering method for an uplink classifier deployed on a PGW according to the disclosure;
Fig. 4 is a schematic diagram of a service traffic steering method for an uplink classifier deployed on a TDF according to the disclosure;
Fig. 5 is a schematic diagram of a service traffic steering device applied to an uplink classifier according to an embodiment of the disclosure;
Fig. 6 is a step flowchart of a service traffic steering method applied to a downlink classifier according to an embodiment not covered by the independent claims. and
Fig. 7 is a schematic diagram of a service traffic steering device applied to a downlink classifier according to an embodiment not covered by the independent claims.

### DETAILED DESCRIPTION

In order to make the technical problem to be solved, technical solutions and advantages of the disclosure clearer, detailed descriptions will be made below in combination with the drawings and specific embodiments.

For the problem of high overhead brought by passing both uplink service traffic and downlink service traffic through the same classifier in the related technology, the disclosure provides a service traffic steering method, device and an uplink classifier, which reduces the overhead brought by passing both the uplink service traffic and downlink service traffic through the same classifier and improves a processing capacity of a network system.

As shown in Fig. 2, an embodiment of the disclosure provides a service traffic steering method, which is applied to an uplink classifier, the method including the following steps.

In Step 21, a steering path identifier of a downlink service traffic is identified according to a service traffic steering policy.

In Step 22, the steering path identifier of the downlink service traffic and description information of the downlink service traffic are sent to a downlink classifier to enable the downlink classifier to mark the downlink service traffic according to the steering path identifier of the downlink service traffic, herein the uplink classifier and the downlink classifier are deployed in different network devices, the uplink classifier further sends the description information of the downlink service traffic to the downlink classifier at the same time of sending the steering path identifier of the downlink service traffic to the downlink classifier, and the description information of the downlink service traffic includes a 5-tuple of the downlink service traffic.

Before Step 22 is executed, the method further includes that: it is determined that the steering path identifier of the downlink service traffic and the description information of the downlink service traffic are required to be sent to the downlink classifier according to a traffic steering policy.

In a specific embodiment of the disclosure, before sending the steering path identifier of the downlink service traffic and the description information of the downlink service traffic to the downlink classifier, the uplink classifier is required to judge whether it is necessary to send the steering path identifier of the downlink service traffic and the description information of the downlink service traffic to the downlink classifier according to the judgment rule preset by itself. Specifically, it is judged whether the Internet Protocol (IP) 5-tuple or partial information thereof of the downlink service traffic can be identified and whether the Internet Protocol (IP) 5-tuple or partial information thereof of the downlink service traffic clearly correspond to the downlink service traffic, if both results of the judgements is yes, it is determined that the steering path identifier of the downlink service traffic and the description information of the downlink service traffic need to be sent to the downlink classifier, and if neither result of the judgements is no, it is determined that there is no need to send the steering path identifier of the downlink service traffic and the description information of the downlink service traffic to the downlink classifier.

There are multiple specific implementation manners for Step 21, and correspondingly, there are also multiple specific implementation manners for Step 22. Specifically, a first implementation manner for Step 21 is that: when the steering path identifier of the downlink service traffic is directly identified according to an uplink service traffic, the uplink service traffic is directly identified to obtain a steering path identifier of the uplink service traffic and the steering path identifier of the downlink service traffic according to the service traffic steering policy. A second implementation manner for Step 21 is that: when the steering path identifier of the downlink service traffic is not directly identified according to the uplink service traffic, the uplink service traffic is identified to obtain the steering path identifier of the uplink service traffic according to the service traffic steering policy; the downlink service traffic steered by a network through the downlink classifier (or directly steered by the network) is received; and states of the uplink service traffic and the downlink service traffic are considered jointly to identify the steering path identifier of the downlink service traffic according to the service traffic steering policy. Correspondingly, a first implementation manner for Step 22 is that: the steering path identifier of the downlink service traffic and the description information of the downlink service traffic are sent to the downlink classifier through signaling interface(s) or a policy controller, herein the policy controller is a Policy and Charging Rules Function (PCRF) in a mobile network or a controller in a Software Defined Network (SDN). A second implementation manner for Step 22 is that: data packet(s) is steered to the downlink classifier through the network, the data packet(s) containing the steering path identifier of the uplink service traffic, the steering path identifier of the downlink service traffic and the description information of the downlink service traffic.

In a specific embodiment not covered by the scope of the independent claims, a content load of the data packet(s) sent by the uplink classifier is null.

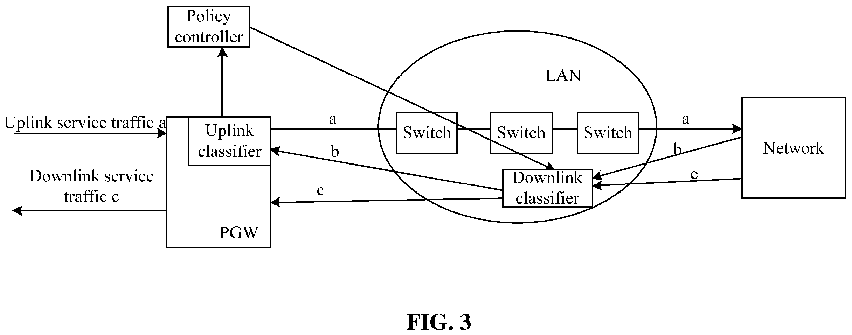

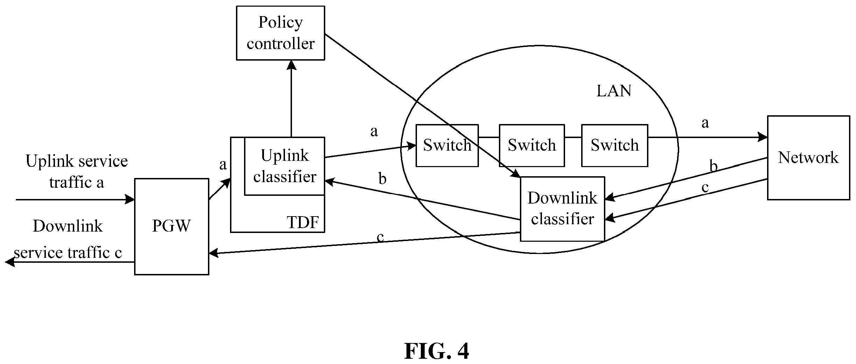

In a specific embodiment of the disclosure, as shown in Fig. 3-Fig. 4, on the basis of the first implementation manner for Step 21 and the first implementation manner for Step 22, the uplink classifier is deployed on a PGW or a TDF. When an uplink service traffic (i.e. "a" in Fig. 3 and Fig. 4) reaches the uplink classifier configured with the service traffic steering policy, the uplink classifier analyzes the uplink service traffic to obtain a steering path identifier of the uplink service traffic and a steering path identifier of a downlink service traffic according to the service traffic steering policy, and marks the uplink service traffic with the steering path identifier of the uplink service traffic. At this moment, the uplink classifier sends the steering path identifier of the downlink service traffic and description information of the downlink service traffic to the downlink classifier through signaling interface(s) or the policy controller. Thereafter, if the related downlink service traffic (i.e. "c" in Fig. 3 and Fig. 4) reaches the downlink classifier, the downlink classifier identifies the downlink service traffic and mark the downlink service traffic with the corresponding steering path identifier. In an embodiment not falling under the scope of the independent claims, if the downlink steering path identifier is subsequently required to be changed, the policy controller notifies the downlink classifier of updating the steering path identifier of the downlink service traffic to steer the change a corresponding path of the downlink service traffic, herein, if the uplink classifier is deployed on the PGW, the uplink classifier sends the steering path identifier of the downlink service traffic and description information of the downlink service traffic to the policy controller through a Gx interface, and if the uplink classifier is deployed on the TDF, the uplink classifier sends the steering path identifier of the downlink service traffic and description information of the downlink service traffic to the policy controller through an Sd interface.

In a specific embodiment of the disclosure, as shown in Fig. 3∼Fig. 4, on the basis of the second implementation manner for Step 21 and the first implementation manner for Step 22, the uplink classifier is deployed on the PGW or the TDF. When an uplink service traffic (i.e. "a" in Fig. 3 and Fig. 4) reaches the uplink classifier configured with the service traffic steering policy, the uplink classifier analyzes the uplink service traffic to obtain a steering path identifier of the uplink service traffic according to the service traffic steering policy, and marks the uplink service traffic with the steering path identifier of the uplink service traffic. At this moment, the uplink classifier has yet not identified a steering path identifier of a downlink service traffic, so that the uplink classifier is required to identify the steering path identifier of the downlink service traffic in combination with states of the downlink service traffic (i.e. "b" in Fig. 3 and Fig. 4) steered by the downlink classifier and the uplink service traffic. After the uplink classifier identifies the steering path identifier of the downlink service traffic, the uplink classifier sends the steering path identifier of the downlink service traffic and description information of the downlink service traffic to the downlink classifier through signaling interface(s) or the policy controller. Thereafter, if the related downlink service traffic (i.e. "c" in Fig. 3 and Fig. 4) reaches the downlink classifier, the downlink classifier identifies the downlink service traffic and mark the downlink service traffic with the corresponding steering path identifier. In an embodiment not falling under the scope of the independent claims, if the downlink steering path identifier is subsequently required to be changed, the policy controller notifies the downlink classifier of updating the steering path identifier of the downlink service traffic to steer the change a corresponding path of the downlink service traffic, herein, if the uplink classifier is deployed on the PGW, the uplink classifier sends the steering path identifier of the downlink service traffic and description information of the downlink service traffic to the policy controller through a Gx interface, and if the uplink classifier is deployed on the TDF, the uplink classifier sends the steering path identifier of the downlink service traffic and description information of the downlink service traffic to the policy controller through an Sd interface.

In a specific embodiment not covered by the scope of the independent claims, as shown in Fig. 3∼Fig. 4, on the basis of the first implementation manner for Step 21 and the second implementation manner for Step 22, when an uplink service traffic (i.e. "a" in Fig. 3 and Fig. 4) reaches the uplink classifier configured with the service traffic steering policy, the uplink classifier analyzes the uplink service traffic to obtain a steering path identifier of the uplink service traffic and a steering path identifier of a downlink service traffic according to the service traffic steering policy, and marks the uplink service traffic with the steering path identifier of the uplink service traffic. At this moment, the uplink classifier steers data packet(s) (the data packet(s) contains the steering path identifier of the uplink service traffic, the steering path identifier of the downlink service traffic and description information of the downlink service traffic) to a subsequent Gi-LAN, then the uplink service traffic is processed by a corresponding service function, that is, the Gi-LAN schedules and steers the uplink service traffic to a corresponding service function unit for value-added service on the basis of the steering path identifier of the uplink service traffic, and then the data packet(s) is steered to the downlink classifier. After receiving the data packet(s), the downlink classifier acquires and record the steering path identifier of the downlink service traffic and description information of the downlink service traffic in the data packet(s). Thereafter, if the related downlink service traffic (i.e. "c" in Fig. 3 and Fig. 4) reaches the downlink classifier, the downlink classifier identifies the downlink service traffic, mark the downlink service traffic with the corresponding steering path identifier and steer the marked downlink service traffic to the Gi-LAN for corresponding service. Herein, if the uplink classifier is deployed on the PGW, a specific identification flow is as mentioned above, and if the PGW in the network has no traffic identification function but the TDF is deployed and the TDF has the traffic identification function, the uplink classifier is deployed on the TDF, but a specific identification flow has the following difference: first, a service traffic subjected to downlink value-added service is directly steered to the PGW, and the TDF only processes an uplink service traffic and an uplink and downlink jointly detected service traffic.

In a specific embodiment of the disclosure, as shown in Fig. 3∼Fig. 4, on the basis of the second implementation manner for Step 21 and the second implementation manner for Step 22, when an uplink service traffic (i.e. "a" in Fig. 3 and Fig. 4) are steered to the uplink classifier configured with the service traffic steering policy, the uplink classifier analyzes the uplink service traffic to obtain a steering path identifier of the uplink service traffic according to the service traffic steering policy, and marks the uplink service traffic with the steering path identifier of the uplink service traffic. At this moment, the uplink classifier has yet not identified a steering path identifier of a downlink service traffic, so that the uplink classifier is required to identify the steering path identifier of the downlink service traffic in combination with states of the downlink service traffic (i.e. "b" in Fig. 3 and Fig. 4) steered by the downlink classifier and the uplink service traffic. After the uplink classifier identifies the steering path identifier of the downlink service traffic, the uplink classifier steers data packet(s) (the data packet(s) contains the steering path identifier of the uplink service traffic, the steering path identifier of the downlink service traffic and description information of the downlink service traffic) to a subsequent Gi-LAN, then the uplink service traffic is processed by certain corresponding service function (s), that is, the Gi-LAN schedules and steers the uplink service traffic to a corresponding service function unit for value-added service on the basis of the steering path identifier of the uplink service traffic, and then the data packet is steered to the downlink classifier. After receiving the data packet(s), the downlink classifier acquires and records the steering path identifier of the downlink service traffic and description information of the downlink service traffic in the data packet(s). Thereafter, if the related downlink service traffic (i.e. "c" in Fig. 3 and Fig. 4) reaches the downlink classifier, the downlink classifier identifies the downlink service traffic, mark the downlink service traffic with the corresponding steering path identifier and steer the marked downlink service traffic to the Gi-LAN for corresponding service. Herein, if the uplink classifier is deployed on the PGW, a specific identification flow is as mentioned above, and if the PGW in the network has no traffic identification function but the TDF is deployed and the TDF has the traffic identification function, the uplink classifier is deployed on the TDF, but a specific identification flow has the following difference: first, a service traffic subjected to downlink value-added service is directly steered to the PGW, and the TDF only processes an uplink service traffic and an uplink and downlink jointly detected service traffic.

In an embodiment not covered by the independent claims, on the basis of the second implementation manner for Step 21 and the second implementation manner for Step 22, after the uplink classifier identifies the steering path identifier of the downlink service traffic, the steering path identifier of the downlink service traffic and the description information of the downlink service traffic is also be directly be sent to the Gi-LAN for downlink value-added service in a data packet manner, and are sent to a user.

In a specific embodiment of the disclosure, on the basis of the second implementation manner for Step 22, when the uplink classifier identifies the steering path identifier of the uplink service traffic and the steering path identifier of the downlink service traffic, steering path identifiers (including the steering path identifier of the uplink service traffic and the steering path identifier of the downlink service traffic) are notified to the downlink classifier, and at this moment, an indication of the steering path identifier is required to point out whether the steering path identifier of the downlink service traffic is included or not. The below is an implementation manner of sending the steering path identifier of the downlink service traffic. 24 characters of a Steering Policy Identifier (SPI) in a service path header are allocated, a first character is a character representing whether the steering path identifier of the downlink service traffic is included or not, for example, 0 represents NO and 1 represents YES. When the first character shows that the steering path identifier of the downlink service traffic is not included, 23 characters are all configured for the steering path identifier of the uplink service traffic; and when the steering path identifier of the downlink service traffic is included, 2 to 12 characters are configured to represent the steering path identifier of the uplink service traffic, and 13 to 23 characters are configured to represent the steering path identifier of the downlink service traffic.

In a specific embodiment of the disclosure, the downlink classifier further obtains the steering path identifier of the downlink service traffic in the following manner: a policy control is configured, and the policy controller directly sends the steering path identifier of the downlink service traffic to the downlink classifier.

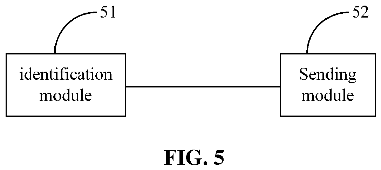

As shown in Fig. 5, an embodiment of the disclosure further provides a service traffic steering device, which is applied to an uplink classifier, the device including:
an identification module 51, configured to identify a steering path identifier of a downlink service traffic according to a service traffic steering policy; and
a sending module 52, configured to send the steering path identifier of the downlink service traffic and description information of the downlink service traffic to a downlink classifier to enable the downlink classifier to mark the downlink service traffic according to the steering path identifier of the downlink service traffic, wherein the uplink classifier and the downlink classifier are deployed in different network devices.

The identification module 51 includes:
a first obtaining unit, configured to, when the steering path identifier of the downlink service traffic can be directly identified according to an uplink service traffic, directly identify the uplink service traffic to obtain the steering path identifier of the downlink service traffic according to the service traffic steering policy.

The identification module 51 includes:
a first unit, configured to, when the steering path identifier of the downlink service traffic is not directly identified according to the uplink service traffic, receive the downlink service traffic; and
a second obtaining unit, configured to identify states of the uplink service traffic and the downlink service traffic to obtain the steering path identifier of the downlink service traffic according to the service traffic steering policy.

The sending module 52 includes:
a second unit, configured to send the steering path identifier of the downlink service traffic and the description information of the downlink service traffic to the downlink classifier through signaling interface(s).

The sending module 52 includes:
a third unit, configured to send the steering path identifier of the downlink service traffic and the description information of the downlink service traffic to the downlink classifier through a policy controller.

The sending module 52 includes:
a fourth unit, configured to steer data packet(s) to the downlink classifier through a network, the data packet(s) containing the steering path identifier of the downlink service traffic and the description information of the downlink service traffic.

It is important to note that the service traffic steering device provided by the embodiment of the disclosure and applied to the uplink classifier is a device applying the abovementioned service traffic steering method applied to the uplink classifier, that is, all the embodiments of the method are applied to the device, and the same or similar beneficial effects are achieved.

An embodiment of the disclosure further provides an uplink classifier, which includes the abovementioned service traffic steering device.

The disclosure further provides a PDN gateway, which includes the abovementioned uplink classifier.

The disclosure further provides a traffic detection function, which includes the abovementioned uplink classifier.

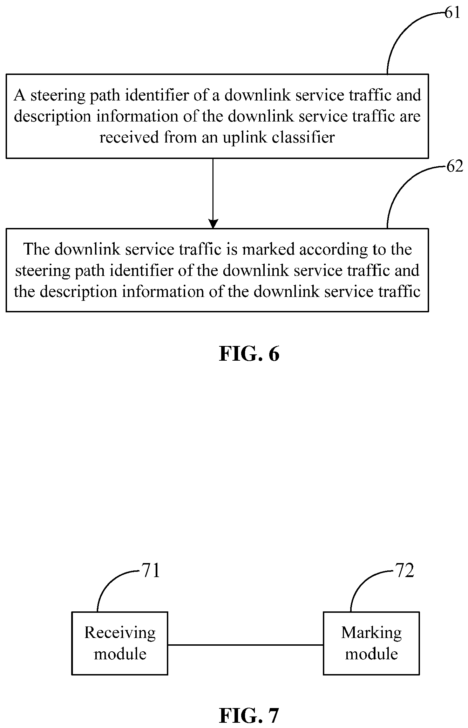

As shown in Fig. 6, an embodiment not covered by the scope of the independent claims a service traffic steering method, which is applied to a downlink classifier, the method including the following steps.

In Step 61, a steering path identifier of a downlink service traffic and description information of the downlink service traffic are received from an uplink classifier.

In Step 62, the downlink service traffic is marked according to the steering path identifier of the downlink service traffic and the description information of the downlink service traffic, wherein the uplink classifier and the downlink classifier are deployed in different network devices.

Before Step 61 is executed, the method further includes that: the downlink service traffic is received; it is determined that no steering path identifier corresponding to the downlink service traffic is recorded per se; and the downlink service traffic is steered to the uplink classifier to enable the uplink classifier to identify the steering path identifier of the downlink service traffic.

Step 61 includes that: the steering path identifier of the downlink service traffic and the description information of the downlink service traffic are received from the uplink classifier through signaling interface(s).

Step 61 includes that: the steering path identifier of the downlink service traffic and the description information of the downlink service traffic are received from the uplink classifier through a policy controller.

Step 61 includes that: data packet(s) steered by the uplink classifier through a network is received, the data packet(s) containing the steering path identifier of the uplink service traffic, the steering path identifier of the downlink service traffic and the description information of the downlink service traffic; and the steering path identifier of the downlink service traffic and the description information of the downlink service traffic are acquired from the data packet(s).

In the disclosure, corresponding to the abovementioned service traffic steering method applied to the uplink classifier, that is, when the uplink classifier sends the steering path identifier of the downlink service traffic and the description information of the downlink service traffic to the downlink classifier through the signaling interface(s) or the policy controller or the data packet(s), the downlink classifier receives the steering path identifier of the downlink service traffic and the description information of the downlink service traffic in a corresponding manner, and mark the downlink service traffic according to the steering path identifier of the downlink service traffic and the description information of the downlink service traffic.

As shown in Fig. 7, representing an embodiment not covered by the scope of the independent claims, a service traffic steering device, which is applied to a downlink classifier, the device including:
a receiving module 71, configured to receive a steering path identifier of a downlink service traffic and description information of the downlink service traffic from an uplink classifier; and
a marking module 72, configured to mark the downlink service traffic according to the steering path identifier of the downlink service traffic and the description information of the downlink service traffic, wherein the uplink classifier and the downlink classifier are deployed in different network devices.

The device further includes:
a fifth unit, configured to receive the downlink service traffic;
a sixth unit, configured to determine that no steering path identifier corresponding to the downlink service traffic is recorded per se; and
a seventh unit, configured to send the downlink service traffic to the uplink classifier to enable the uplink classifier to identify the steering path identifier of the downlink service traffic.

The receiving module 71 includes:
an eighth unit, configured to receive the steering path identifier of the downlink service traffic and the description information of the downlink service traffic from the uplink classifier through signaling interface(s).

The receiving module 71 includes:
a ninth unit, configured to receive the steering path identifier of the downlink service traffic and the description information of the downlink service traffic from the uplink classifier through a policy controller.

The receiving module 71 includes:
a tenth unit, configured to receive data packet(s) steered by the uplink classifier through a network, the data packet(s) containing the steering path identifier of the downlink service traffic and the description information of the downlink service traffic; and
an eleventh unit, configured to acquire the steering path identifier of the downlink service traffic and the description information of the downlink service traffic from the data packet(s).

It is important to note that the service traffic steering device provided in this non-claimed embodiment and applied to the downlink classifier is a device applying the abovementioned service traffic steering method applied to the downlink classifier, that is, all methods are applied to the device, and the same or similar beneficial effects are achieved.

An embodiment not covered by the scope of the independent claims provides a downlink classifier, which includes the abovementioned service traffic steering device.

In a further embodiment not covered by the scope of the independent claims, the downlink classifier is positioned in a network address translation network element in the related technology. For example, a function of the downlink classifier is realized by enhancing network address translation.

A further embodiment not covered by the scope of the independent claims provides a service traffic steering system, which includes the abovementioned uplink classifier, the abovementioned downlink classifier and a policy controller, the policy controller being configured to receive a steering path identifier of a downlink service traffic and description information of the downlink service traffic from the uplink classifier and send the steering path identifier of the downlink service traffic and the description information of the downlink service traffic to the downlink classifier.

Wherein, the policy controller has the steering path identifier of the downlink service traffic and the description information of the downlink service traffic, and is further configured to send the steering path identifier of the downlink service traffic and the description information of the downlink service traffic to the downlink classifier.

Wherein, the downlink classifier is further configured to receive the steering path identifier of the downlink service traffic and the description information of the downlink service traffic from the policy controller.

Wherein, the policy controller is further be configured to, when the steering path identifier of the downlink service traffic is required to be updated, send an updating rule to the downlink classifier.

The policy controller forwards the steering path identifier of the downlink service traffic and description information of the downlink service traffic, which are sent by the uplink classifier, to the downlink classifier. The policy controller also directly sends its own steering path identifier of the downlink service traffic and description information of the downlink service traffic to the downlink classifier. Therefore, when the steering path identifier of the downlink service traffic is required to be updated, the policy controller directly sends the updating rule to the downlink classifier.

The above is the preferred implementation mode of the disclosure. It should be pointed out that those skilled in the art further makes a plurality of improvements and embellishments without departing from the principle of the disclosure and these improvements and embellishments shall also fall within the scope of protection of the claims.

## Claims

1. A service traffic steering method, applied to an uplink classifier, the method comprising:
identifying (21) a steering path identifier of a downlink service traffic according to a service traffic steering policy comprising:
when the steering path identifier of the downlink service traffic can be directly identified according to an uplink service traffic, directly inspecting the uplink service traffic to obtain the steering path identifier of the downlink service traffic according to the service traffic steering policy; or
when the steering path identifier of the downlink service traffic cannot be directly identified according to the uplink service traffic, receiving the downlink service traffic also; and
inspecting the uplink and downlink service traffic information jointly to recognize the steering path identifier of the downlink service traffic according to the service traffic steering policy;
determining that an internet protocol, IP, 5-tuple or partial information of the IP 5-tuple of the downlink service traffic can be identified and that the IP 5-tuple or the partial information of the IP 5-tuple of the downlink service traffic clearly corresponds to the downlink service traffic; and
sending (22), after it has been determined that the IP 5-tuple or the partial information of the IP 5-tuple can be identified and clearly corresponds to the downlink service traffic, the steering path identifier of the downlink service traffic and description information comprising the determined IP 5-tuple or partial information of the IP 5-tuple of the downlink service traffic to a downlink classifier to enable the downlink classifier to identify and to mark related downlink service traffic with the steering path identifier of the downlink service traffic, wherein the uplink classifier and the downlink classifier are deployed in different network devices.

2. The method according to claim 1, wherein sending the steering path identifier of the downlink service traffic and the description information of the downlink service traffic to the downlink classifier comprises:
sending the steering path identifier of the downlink service traffic and the description information of the downlink service traffic to the downlink classifier through signaling interface(s); or
sending the steering path identifier of the downlink service traffic and the description information of the downlink service traffic to the downlink classifier through a policy controller; or
steering data packet(s) to the downlink classifier, the data packet(s) containing the steering path identifier of the downlink service traffic and the description information of the downlink service traffic.

3. A service traffic steering device, applied to an uplink classifier, the device comprising:
an identification module (51), configured to identify a steering path identifier of a downlink service traffic according to a service traffic steering policy;
wherein the identification module (51) comprises;
a first obtaining unit, configured to, when the steering path identifier of the downlink service traffic can be directly identified according to an uplink service traffic, directly inspect the uplink service traffic to obtain the steering path identifier of the downlink service traffic according to the service traffic steering policy; or
a first unit, configured to, when the steering path identifier of the downlink service traffic cannot be directly identified according to the uplink service traffic, receive the downlink service traffic also; and
a second obtaining unit, configured to inspect the uplink and downlink service traffic information jointly to recognize the steering path identifier of the downlink service traffic according to the service traffic steering policy; and
a sending module (52), configured to, upon determination that an internet protocol, IP, 5-tuple or partial information of the IP 5-tuple of the downlink service traffic can be identified and that the IP 5-tuple or the partial information of the IP 5-tuple of the downlink service traffic clearly corresponds to the downlink service traffic: send the steering path identifier of the downlink service traffic and description information comprising the determined IP 5-tuple or partial information of the IP 5-tuple of the downlink service traffic to a downlink classifier to enable the downlink classifier to identify and to mark related downlink service traffic with the steering path identifier of the downlink service traffic, wherein the uplink classifier and the downlink classifier are deployed in different network devices.

4. The device according to claim 3, wherein the sending module (52) comprises:
a second unit, configured to send the steering path identifier of the downlink service traffic and the description information of the downlink service traffic to the downlink classifier through signaling interface(s); or
a third unit, configured to send the steering path identifier of the downlink service traffic and the description information of the downlink service traffic to the downlink classifier through a policy controller; or
a fourth unit, configured to steer data packet(s) to the downlink classifier, the data packet(s) containing the steering path identifier of the downlink service traffic and the description information of the downlink service traffic.

5. An uplink classifier, comprising: the service traffic steering device according to claim 3 or 4.

## Patentansprüche

1. Verfahren zur Steuerung von Dienstverkehr, angewandt auf einen Uplink-Klassifizierer, wobei das Verfahren umfasst:
Identifizieren (21) eines Lenkungspfad-Identifizierers eines Downlink-Dienstverkehrs gemäß einer Dienstverkehr-Lenkungsrichtlinie, umfassend:
wenn der Lenkungspfad-Identifizierer des Downlink-Dienstverkehrs direkt gemäß einem Uplink-Dienstverkehr identifiziert werden kann, direkte Prüfung des Uplink-Dienstverkehrs, um den Lenkungspfad-Identifizierer des Downlink-Dienstverkehrs gemäß der Dienstverkehr-Lenkungsrichtlinie zu erhalten; oder
wenn der Lenkungspfad-Identifizierer des Downlink-Dienstverkehrs nicht direkt gemäß dem Uplink-Dienstverkehr identifiziert werden kann, ebenfalls Empfangen des Downlink-Dienstverkehr; und
gemeinsames Prüfen der Uplink- und Downlink-Dienstverkehrsinformationen, um den Lenkungspfad-Identifizierer des Downlink-Dienstverkehrs gemäß der Dienstverkehr-Lenkungsrichtlinie zu erkennen;
Bestimmen, dass ein Internetprotokoll, IP, 5-Tupel oder eine Teilinformation des IP 5-Tupels des Downlink-Dienstverkehrs identifiziert werden kann und dass das IP 5-Tupel oder die Teilinformation des IP 5-Tupels des Downlink-Dienstverkehrs eindeutig dem Downlink-Dienstverkehr entspricht; und
Senden (22), nachdem bestimmt wurde, dass das IP 5-Tupel oder die Teilinformation des IP 5-Tupels identifiziert werden kann und eindeutig dem Downlink-Dienstverkehr entspricht, des Lenkungspfad-Identifizierers des Downlink-Dienstverkehrs und der Beschreibungsinformation, die das bestimmte IP 5-Tupel oder die Teilinformation des IP 5-Tupels des Downlink-Dienstverkehrs umfasst, an einen Downlink-Klassifizierer, um den Downlink-Klassifizierer in die Lage zu versetzen, verwandten Downlink-Dienstverkehr mit dem Lenkungspfad-Identifizierer des Downlink-Dienstverkehrs zu identifizieren und zu markieren, wobei der Uplink-Klassifizierer und der Downlink-Klassifizierer in verschiedenen Netzwerkvorrichtungen eingesetzt werden.

2. Verfahren nach Anspruch 1, wobei das Senden des Lenkungspfad-Identifizierers des Downlink-Dienstverkehrs und der Beschreibungsinformationen des Downlink-Dienstverkehrs an den Downlink-Klassifizierer umfasst:
Senden des Lenkungspfad-Identifizierers des Downlink-Dienstverkehrs und der Beschreibungsinformationen des Downlink-Dienstverkehrs an den Downlink-Klassifizierer über die Signalisierungsschnittstelle(n); oder
Senden des Lenkungspfad-Identifizierers des Downlink-Dienstverkehrs und der Beschreibungsinformationen des Downlink-Dienstverkehrs an den Downlink-Klassifizierer durch eine Richtliniensteuerung; oder
Lenken von Datenpaket(en) an den Downlink-Klassifizierer, wobei das/die Datenpaket(e) den Lenkungspfad-Identifizierer des Downlink-Dienstverkehrs und die Beschreibungsinformationen des Downlink-Dienstverkehrs enthalten.

3. Verfahren zur Steuerung von Dienstverkehr, angewandt auf einen Uplink-Klassifizierer, wobei die Vorrichtung umfasst:
ein Identifizierungsmodul (51), das so konfiguriert ist, dass es einen Lenkungspfad-Identifizierer eines Downlink-Dienstverkehrs gemäß einer Dienstverkehr-Lenkungsrichtlinie identifiziert;
wobei das Identifizierungsmodul (51) umfasst;
eine erste Erhaltungseinheit, die so konfiguriert ist, dass sie, wenn der Lenkungspfad-Identifizierer des Downlink-Dienstverkehrs gemäß einem Uplink-Dienstverkehr direkt identifiziert werden kann, den Uplink-Dienstverkehr direkt prüft, um den Lenkungspfad-Identifizierer des Downlink-Dienstverkehrs gemäß der Dienstverkehr-Lenkrichtlinie zu erhalten; oder
eine erste Einheit, die so konfiguriert ist, dass sie, wenn der Lenkungspfad-Identifizierer des Downlink-Dienstverkehrs nicht direkt gemäß dem Uplink-Dienstverkehr identifiziert werden kann, auch den Downlink-Dienstverkehr empfängt; und
eine zweite Erhaltungseinheit, die so konfiguriert ist, dass sie die Uplink- und Downlink-Dienstverkehrsinformationen gemeinsam prüft, um den Lenkungspfad-Identifizierer des Uplink-Dienstverkehrs gemäß der Dienstverkehr-Lenkungsrichtlinie zu erkennen; und
ein Sendemodul (52), das so konfiguriert ist, dass es bei Bestimmung, dass ein Internetprotokoll, IP, 5-Tupel oder eine Teilinformation des IP 5-Tupels des Downlink-Dienstverkehrs identifiziert werden kann und dass das IP 5-Tupel oder die Teilinformation des IP 5-Tupels des Downlink-Dienstverkehrs eindeutig dem Downlink-Dienstverkehr entspricht: den Lenkungspfad-Identifizierer des Downlink-Dienstverkehrs und von Beschreibungsinformationen, die das ermittelte IP 5-Tupel oder Teilinformationen des IP 5-Tupels des Downlink-Dienstverkehrs umfassen, an einen Downlink-Klassifizierer sendet, um den Downlink-Klassifizierer in die Lage zu versetzen, zugehörigen Downlink-Dienstverkehr mit dem Lenkungspfad-Identifizierer des Downlink-Dienstverkehrs zu identifizieren und zu markieren, wobei der Uplink-Klassifizierer und der Downlink-Klassifizierer in verschiedenen Netzwerkvorrichtungen eingesetzt werden.

4. Vorrichtung nach Anspruch 3, wobei die Sendeeinheit (52) Folgendes umfasst:
eine zweite Einheit, die so konfiguriert ist, dass sie den Lenkungspfad-Identifizierer des Downlink-Dienstverkehrs und die Beschreibungsinformationen des Downlink-Dienstverkehrs über die Signalisierungsschnittstelle(n) an den Downlink-Klassifizierer sendet; oder
eine dritte Einheit, die so konfiguriert ist, dass sie den Lenkungspfad-Identifizierer des Downlink-Dienstverkehrs und die Beschreibungsinformationen des Downlink-Dienstverkehrs über eine Richtliniensteuerung an den Downlink-Klassifizierer sendet; oder
eine vierte Einheit, die so konfiguriert ist, dass sie Datenpaket(e) an den Downlink-Klassifizierer lenkt, wobei das/die Datenpaket(e) den Lenkungspfad-Identifizierer des Downlink-Dienstverkehrs und die Beschreibungsinformationen des Downlink-Dienstverkehrs enthalten.

5. Uplink-Klassifizierer, umfassend:
Vorrichtung zur Lenkung von Dienstverkehr nach Anspruch 3 oder 4.

## Revendications

1. Procédé d'orientation de trafic de service, appliqué à un classificateur de liaison montante, le procédé comprenant :
l'identification (21) d'un identifiant de trajet d'orientation d'un trafic de service de liaison descendante selon une politique d'orientation de trafic de service comprenant :
lorsque l'identifiant de trajet d'orientation du trafic de service de liaison descendante peut être identifié directement selon un trafic de service de liaison montante, l'inspection directe du trafic de service de liaison montante pour obtenir l'identifiant de trajet d'orientation du trafic de service de liaison descendante selon la politique d'orientation de trafic de service ; ou
lorsque l'identifiant de trajet d'orientation du trafic de service de liaison descendante ne peut pas être identifié directement selon le trafic de service de liaison montante, la réception du trafic de service de liaison descendante également ; et
l'inspection des informations de trafic de service de liaison montante et de liaison descendante conjointement pour reconnaître l'identifiant de trajet d'orientation du trafic de service de liaison descendante selon la politique d'orientation de trafic de service ;
la détermination qu'un protocole internet, IP, 5-uplet ou que des informations partielles de l'IP 5-uplet du trafic de service de liaison descendante, peut/peuvent être identifié(es) et que l'IP 5-uplet ou les informations partielles de l'IP 5-uplet du trafic de service de liaison descendante correspond(ent) clairement au trafic de service de liaison descendante ; et
l'envoi (22), une fois qu'il a été déterminé que l'IP 5-uplet ou les informations partielles de l'IP 5-uplet peut/peuvent être identifié(es) et correspond(ent) clairement au trafic de service de liaison descendante, de l'identifiant de trajet d'orientation du trafic de service de liaison descendante et des informations de description comprenant l'IP 5-uplet ou les informations partielles de l'IP 5-uplet déterminé(es) du trafic de service de liaison descendante à un classificateur de liaison descendante pour permettre au classificateur de liaison descendante d'identifier et de marquer le trafic de service de liaison descendante associé avec l'identifiant de trajet d'orientation du trafic de service de liaison descendante, dans lequel le classificateur de liaison montante et le classificateur de liaison descendante sont déployés dans différents dispositifs de réseau.

2. Procédé selon la revendication 1, dans lequel l'envoi de l'identifiant de trajet d'orientation du trafic de service de liaison descendante et des informations de description du trafic de service de liaison descendante au classificateur de liaison descendante comprend :
l'envoi de l'identifiant de trajet d'orientation du trafic de service de liaison descendante et des informations de description du trafic de service de liaison descendante au classificateur de liaison descendante par le biais d'une interface/d'interfaces de signalisation ; ou
l'envoi de l'identifiant de trajet d'orientation du trafic de service de liaison descendante et des informations de description du trafic de service de liaison descendante au classificateur de liaison descendante par le biais d'un dispositif de commande de politique ; ou
l'orientation d'un/de paquet(s) de données vers le classificateur de liaison descendante, le(s) paquet(s) de données contenant l'identifiant de trajet d'orientation du trafic de service de liaison descendante et les informations de description du trafic de service de liaison descendante.

3. Dispositif d'orientation de trafic de service vers un classificateur de liaison montante, le dispositif comprenant :
un module d'identification (51), conçu pour identifier un identifiant de trajet d'orientation d'un trafic de service de liaison descendante selon une politique d'orientation de trafic de service ;
dans lequel le module d'identification (51) comprend :
une première unité d'obtention conçue, lorsque l'identifiant de trajet d'orientation du trafic de liaison descendante peut être identifié directement selon un trafic de service de liaison montante, pour inspecter directement le trafic de service de liaison montante pour obtenir l'identifiant de trajet d'orientation du trafic de service de liaison descendante selon la politique d'orientation de trafic de service ; ou
une première unité conçue, lorsque l'identifiant de trajet d'orientation du trafic de service de liaison descendante ne peut pas être identifié directement selon le trafic de service de liaison montante, pour recevoir le trafic de service de liaison descendante également ; et
une seconde unité d'obtention, conçue pour inspecter les informations de trafic de service de liaison montante et de liaison descendante conjointement pour reconnaître l'identifiant de trajet d'orientation du trafic de service de liaison descendante selon la politique d'orientation de trafic de service ; et
un module d'envoi (52) conçu, lors de la détermination qu'un protocole internet IP, 5-uplet ou que des informations partielles de l'IP 5-uplet du trafic de service de liaison descendante, peut/peuvent être identifié(es) et que l'IP 5-uplet ou les informations partielles de l'IP 5-uplet du trafic de service de liaison descendante correspond(ent) clairement au trafic de service de liaison descendante, pour envoyer l'identifiant de trajet d'orientation du trafic de service de liaison descendante et les informations de description comprenant l'IP 5-uplet ou les informations partielles de l'IP 5-uplet déterminé(es) du trafic de service de liaison descendante à un classificateur de liaison descendante pour permettre au classificateur de liaison descendante d'identifier et de marquer le trafic de service de liaison descendante associé avec l'identifiant de trajet d'orientation du trafic de service de liaison descendante, dans lequel le classificateur de liaison montante et le classificateur de liaison descendante sont déployés dans différents dispositifs de réseau.

4. Dispositif selon la revendication 3, dans lequel le module d'envoi (52) comprend :
une deuxième unité, conçue pour envoyer l'identifiant de trajet d'orientation du trafic de service de liaison descendante et les informations de description du trafic de service de liaison descendante au classificateur de liaison descendante par le biais d'une interface/d'interfaces de signalisation ; ou
une troisième unité, conçue pour envoyer l'identifiant de trajet d'orientation du trafic de service de liaison descendante et les informations de description du trafic de service de liaison descendante au classificateur de liaison descendante par le biais d'un dispositif de commande de politique ; ou
une quatrième unité, conçue pour orienter un/des paquet(s) de données vers le classificateur de liaison descendante, le(s) paquet(s) de données contenant l'identifiant de trajet d'orientation du trafic de service de liaison descendante et les informations de description du trafic de service de liaison descendante.

5. Classificateur de liaison montante, comprenant :
le dispositif d'orientation de trafic de service selon la revendication 3 ou 4.
